# EUROPEAN PATENT SPECIFICATION

(11) **EP 4 192 766 B1**
(45) Date of publication and mention of the grant of the patent: **05.03.2025**
(21) Application number: 21766218.8
(22) Date of filing: 10.08.2021
(51) Int. Cl.: B65G 1/04, B65G 1/137, G07F 9/10, G07F 11/62

(54) **AUTOMATIC CABINET FOR THE STORAGE AND ON-DEMAND DISTRIBUTION OF ITEMS**
AUTOMATISCHER SCHRANK ZUR LAGERUNG UND VERTEILUNG VON GEGENSTÄNDEN AUF ANFRAGE
ARMOIRE AUTOMATIQUE POUR LE STOCKAGE ET LA DISTRIBUTION D'ARTICLES À LA DEMANDE

(30) Priority: 10.08.2020 IT 202000019882
(43) Date of publication of application: 14.06.2023
(73) Proprietor: Sintesi Srl, 35012 Camposampiero (PD) (IT)
(72) Inventor: FERRO, Silvano, 35010 Borgoricco (PD) (IT); AGNOLETTO, Sergio, 31038 Paese (TV) (IT)
(74) Representative: De Sandre, Emanuele
(86) International application number: PCT/IB2021/057360
(87) International publication number: WO 2022/034492

(56) References cited:
- WO-A1-2009/057166
- WO-A1-2015/036879
- WO-A1-2019/026042

## Description

The invention concerns an automatic cabinet for the storage and on-demand distribution of items.

Nowadays, in order to make items of immediate use available to a user within a working environment, for example a tool, or a mask, or a pair of gloves, automatic vending machines are used comprising a cabinet inside which there is a plurality of planes of ordered rows of products of the same type, for each row there being means, generally a spiral for supporting and advancing the items, configured to make the first product of each row drop into a front drop gap; at the bottom of the drop gap there is a wing through which the user can pick up the selected item.

Such spiral automatic vending machines, although widespread and popular, have some important drawbacks.

A first drawback is linked to the fact that the type of products that can be stored in such a vending machine is limited by the number of rows of products, since each row is made up of identical products, and the same row cannot comprise types of different products.

A second drawback is linked to the fact that these automatic vending machines cannot handle particularly heavy or fragile products, due to the extraction system by drop from above, where a drop could compromise the integrity of the item selected to be extracted from the automatic vending machine.

A third drawback is constituted by the fact that the pick-up wing is placed close to the ground, in an area which forces the user to stoop a lot, bending forward or crouching down, to pick up the selected item; this situation normally causes inconvenience for the user.

A second type of automatic vending machines has a cabinet inside which a matrix of individual compartments is defined, each of which is accessible by a respective wing closed by a corresponding automatic lock.

Such automatic vending machines can therefore also contain heavy and fragile items or items that are not suitable to be extracted by drop.

Such automatic vending machines can also contain items of very different sizes, as the compartments have a free volume that can be occupied by an item that is much larger than the volumes available for the items in a spiral automatic vending machine.

However, such automatic vending machines are less capacious overall, as each compartment is designed to contain one and only one item.

Furthermore, such automatic vending machines with doors have as many pick-up points as there are wings, and each wing is therefore a possible break-in point by an attacker.

Automatic vending machines of the type with rotary plates are also known and widespread, where a plurality of rotary plates is arranged coaxial with respect to an axis of rotation, and each plate is divided into a plurality of radial cells.

Such vending machines with rotary plates are advantageously equipped with a limited number of electric motors to move the plates, compared with spiral automatic vending machines, which have an electric motor for each spiral, but have a significant capacity limitation, due to the fact that the central area of the plate is not accessible and therefore results in a large unused volume.

All the above-mentioned types of automatic vending machines also have in common that only one item at a time can be picked up from them. WO 2015/036879 A1 discloses an automatic cabinet according to the preamble of claim 1.

The task of the present invention is to develop an automatic cabinet for the storage and on-demand distribution of items, capable of overcoming the aforementioned drawbacks and limitations of the known technology.

In particular, an object of the invention is to develop an automatic cabinet which is larger than known vending machines and at the same time capable of containing a greater number of different types of items.

Another object of the invention is to develop an automatic cabinet capable of containing and presenting to a user even heavy or fragile items, without these items having to undergo a drop, which would jeopardise the integrity thereof.

A further object of the invention is to develop an automatic cabinet with a single pick-up point placed at an ergonomically easy-to-access height.

Furthermore, an object of the invention is to develop an automatic cabinet that can be governed and managed by means of digital electronic and computer control devices of a type known in itself.

Another important object of the invention is to develop an automatic cabinet that allows more than one item to be picked up at the same time.

The above-mentioned task and objects are achieved by an automatic cabinet for the storage and on-demand distribution of items according to claim 1.

Further features of the automatic cabinet according to claim 1 are described in the dependent claims.

The task and the aforesaid objects, together with the advantages that will be mentioned hereinafter, are indicated by the description of an embodiment of the invention, which is given by way of non-limiting example with reference to the attached drawings, where:

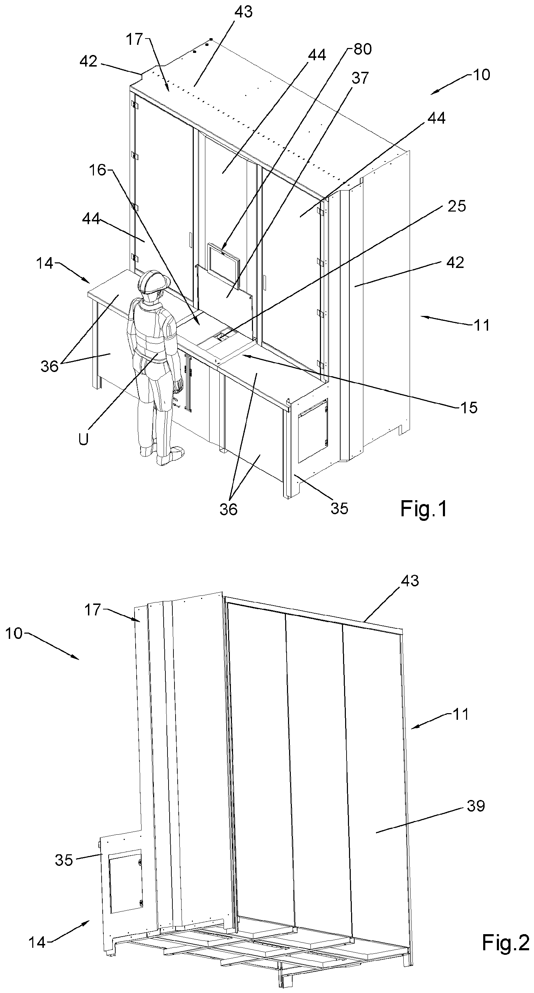

- Figure 1 represents a front perspective view of an automatic cabinet according to the invention;
- Figure 2 represents a rear perspective view of the automatic cabinet according to the invention;
- Figure 3 represents a perspective view from above of a detail of the automatic cabinet according to the invention;
- Figure 4 represents a perspective view of an object-holder tray of an automatic cabinet according to the invention, with a plurality of items inside;
- Figure 5 represents a perspective exploded view of the object-holder drawer of Figure 4;
- Figure 6 represents the object-holder tray of Figure 4 with no items inside;
- Figure 7 represents a perspective view of a group of elements of the automatic cabinet according to the invention;
- Figure 8 represents a perspective section of the automatic cabinet according to the invention;
- Figure 9 represents another perspective section of the automatic cabinet according to the invention;
- Figure 10 represents a detail of the group of elements of Figure 7;
- Figure 11 represents a side section view of the automatic cabinet according to the invention;
- Figure 11a represents a further perspective section of the automatic cabinet according to the invention;
- Figure 12 represents a perspective section of a portion of the automatic cabinet according to the invention;
- Figure 12a represents a schematic side view of the portion of Figure 12;
- Figure 13 represents another perspective section of the automatic cabinet according to the invention;
- Figure 14 represents a further perspective section of the automatic cabinet according to the invention;
- Figure 15 represents an arrangement of use of the automatic cabinet according to the invention;
- Figure 16 represents a different arrangement of use of the automatic cabinet according to the invention.

With reference to the above-mentioned figures, an automatic cabinet for the storage and on-demand distribution of items according to the invention is indicated as a whole by numeral **10.**

This automatic cabinet **10** comprises:
- a rear part **11** configured to contain an ordered plurality of object-holder trays **12;**
- a plurality of object-holder trays **12** comprising a plurality of compartments **13, 13a, 13b, 13c, 13d;**
- a front part **14** for picking up one or more objects from one of these object-holder trays **12,** comprising a pick-up station **15** configured to house one of said object-holder trays **12;** this pick-up station **15** having a portal **16** for closing/access to an object-holder tray **12** positioned therein;
- a central part **17** inside which transfer means **18** are placed, configured to pick up and to shift an object-holder tray **12** from the rear part **11** to the pick-up station **15** and vice versa.

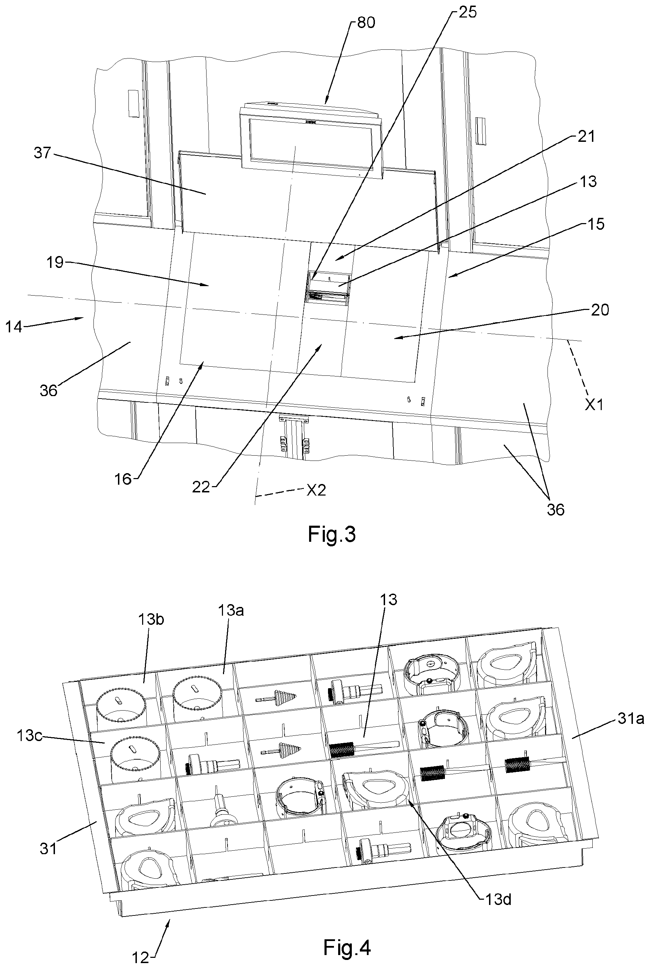

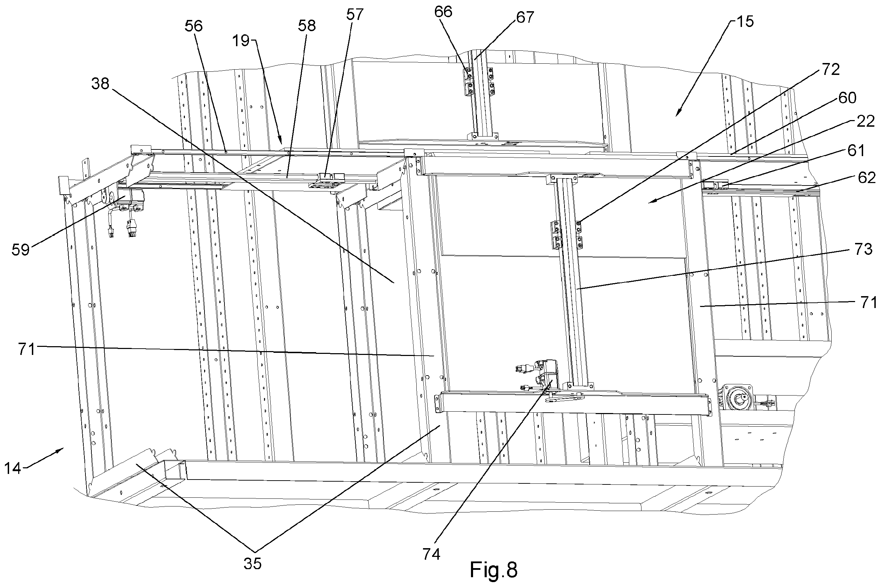

As clearly visible in Figures 3, 7, 8 and 9, the portal **16** comprises two opposing pairs of movable dampers **19, 20, 21, 22,** which are motorised with corresponding movement means:
- a first pair of movable dampers **19** and **20** operating along a first direction **X1,**
- a second pair of movable dampers **21** and **22** operating in a second direction **X2,** orthogonal to the first direction **X1.**

A first pair of movable dampers **19** and **20** is arranged to operate above the second pair of movable dampers **21** and **22.**

Alternatively, the first pair of movable dampers **19** and **20** may be arranged to operate below the second pair of movable dampers **21** and **22.**

A first pair of movable dampers **19** and **20** thus results in a first level of closure and opening, while the second pair of movable dampers **21** and **22** results in a second level of closure and opening of the portal **16.**

The first pair of movable dampers **19** and **20** and the second pair of movable dampers **21** and **22** are adjacent, i.e. at a short distance from each other in the vertical direction, i.e. at a distance in the vertical direction comprised between 1 and 10 millimetres.

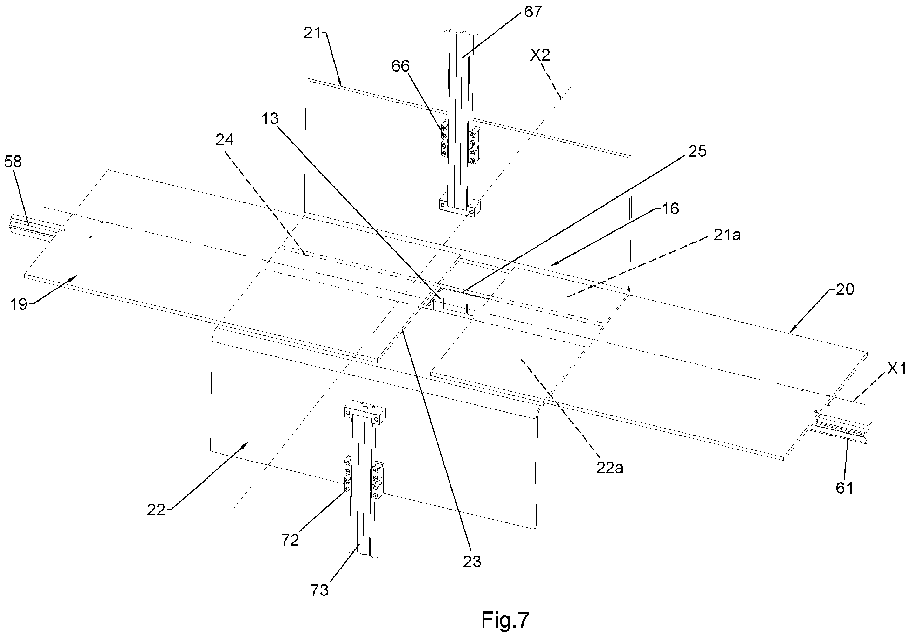

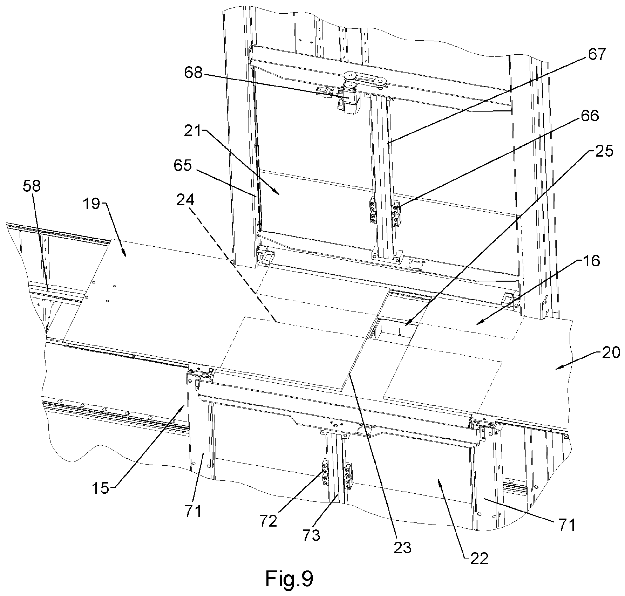

A first pair of movable dampers **19** and **20** defines, between these movable dampers **19** and **20,** a transverse opening **23** developing in the second direction **X2,** as shown in Figures 7 and 9.

The second pair of movable dampers **21** and **22** define between these movable dampers **21** and **22** a longitudinal opening **24** developing in the first direction **X1.**

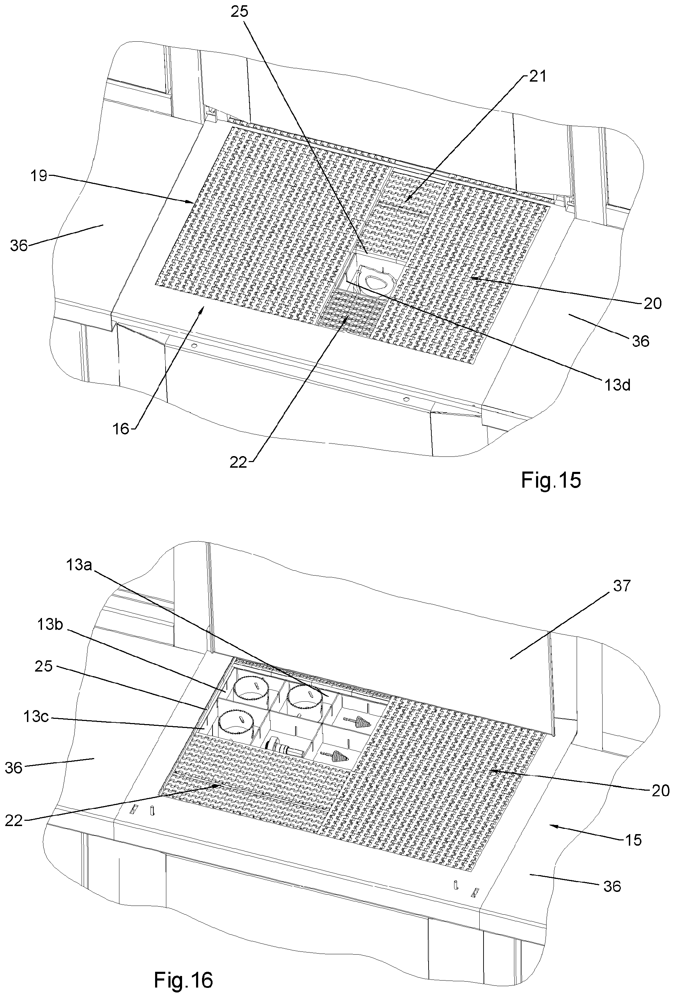

The intersection of the transverse opening **23** with the longitudinal opening **24** results in a pick-up opening **25** configured to allow access to one of the compartments **13, 13a, 13b, 13c, 13d,** or to more compartments **13a, 13b, 13c** that are placed side by side, as per Figure 16, of an object-holder tray **12** positioned in the pick-up station **15.**

This object-holder tray **12** is positioned below the portal **16** and therefore below the two pairs of movable dampers.

The pick-up opening **25** is therefore a through opening which allows a user's hand to pass from the outside up to the inside of an underlying compartment **13** of an underlying object-holder tray **12.**

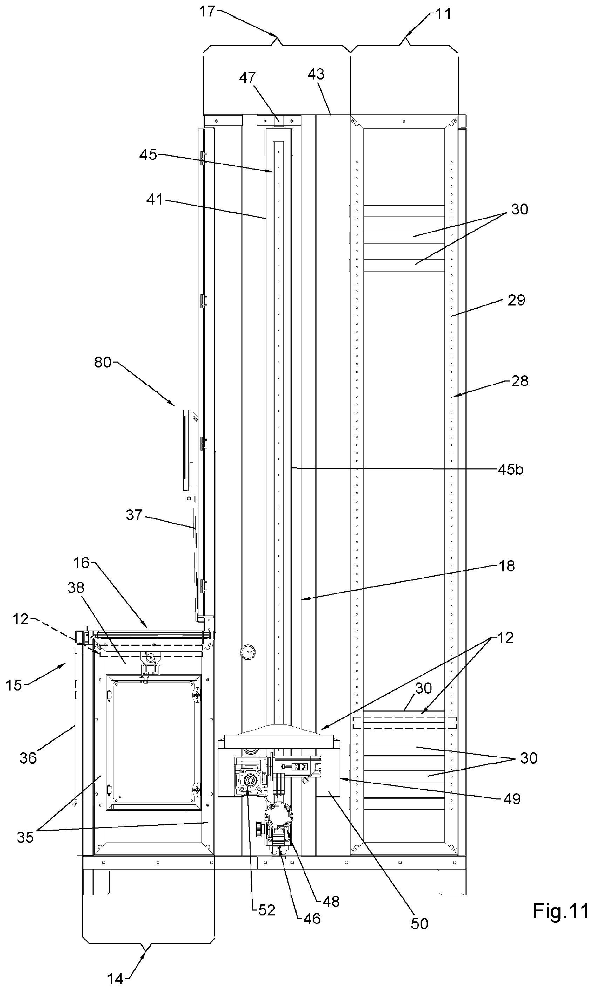

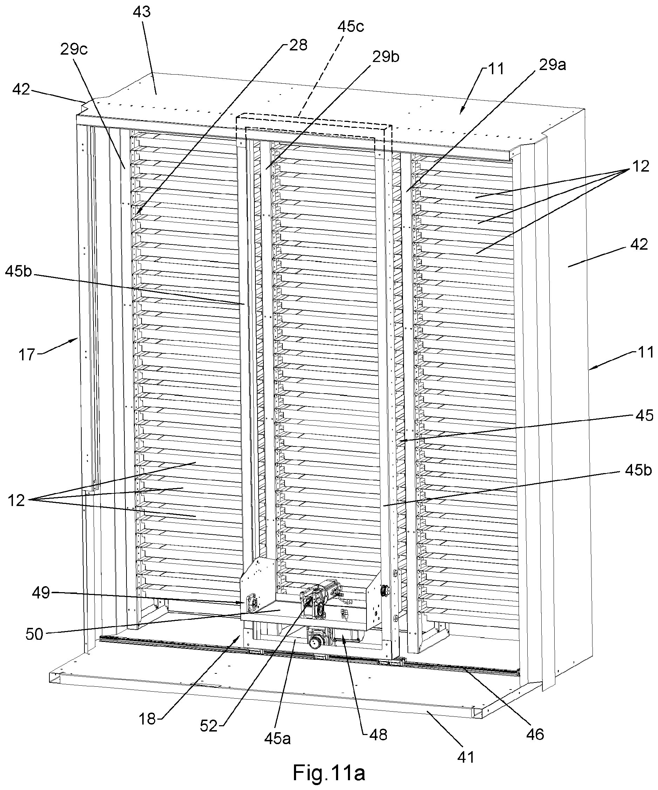

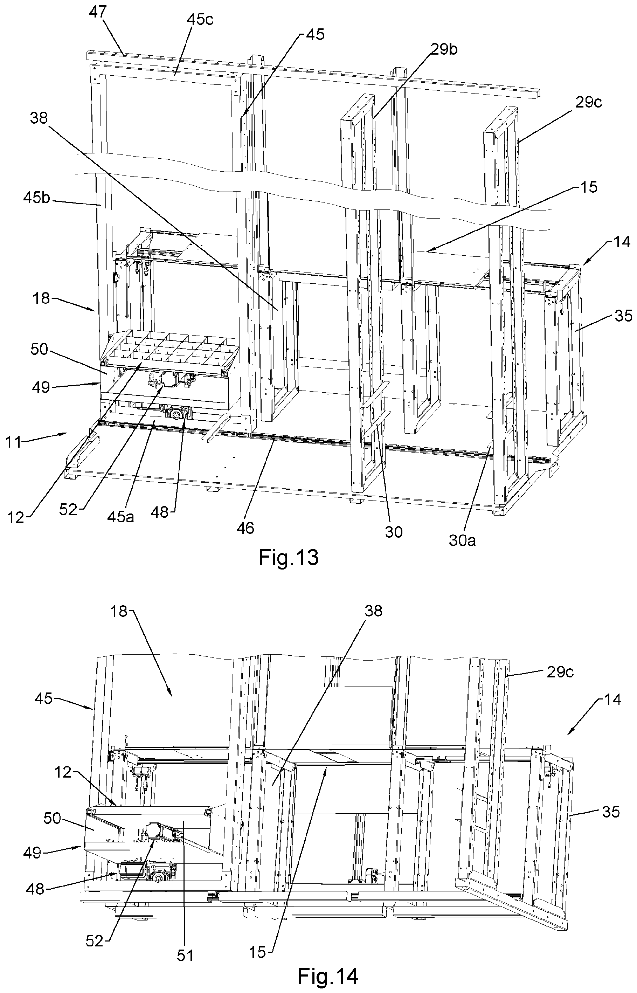

The rear part **11** comprises a load-bearing frame **28** having a plurality of columnar elements **29, 29a, 29b, 29c,** between which pairs of rest elements **30, 30a** are fixed which are facing each other, exemplified in Figures 11 and 13, and configured to support, by resting, a perimeter flap **31, 31a** of an object-holder tray **12.**

The columnar elements **29, 29a, 29b, 29c** each comprise, for example and not exclusively, two uprights joined by a lower crosspiece and an upper crosspiece, as is clearly visible in Figures 11 to 14.

The rest elements **30** and **30a** each comprise an 'L'-shaped bracket defining a shelf configured to house, by resting, a perimeter flap **31, 31a** of an object-holder tray **12.**

Between a pair of facing rest elements **30** and **30a** a passage interspace is defined for the transfer means **18,** which are described below.

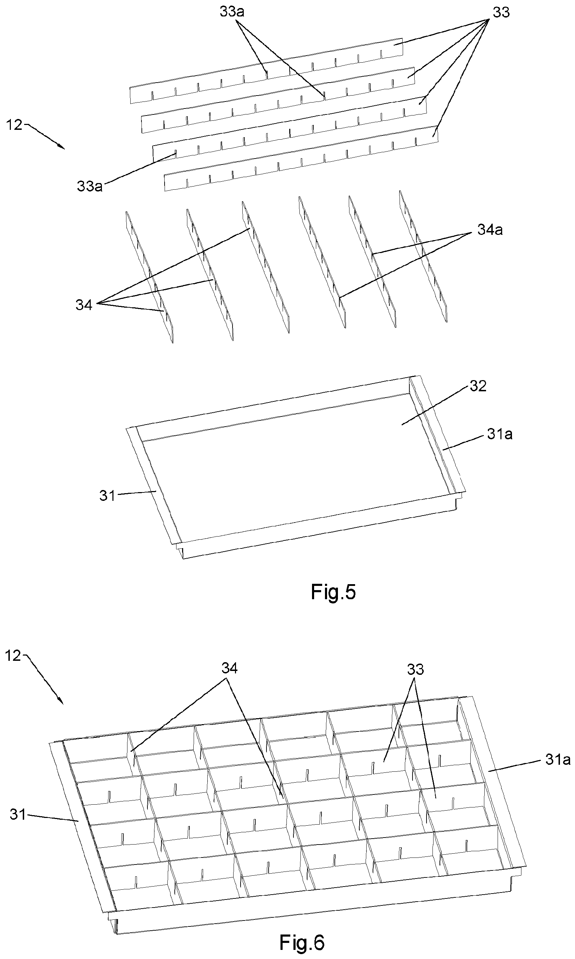

Each of the object-holder trays **12** comprises, as clearly visible in Figures 4, 5 and 6, a pan **32** inside which a plurality of dividing elements is arranged, i.e. first dividing elements **33,** longitudinal, and second dividing elements **34,** transverse.

The first dividing elements **33** and the second dividing elements **34** intersect to define a matrix of compartments **13, 13a, 13b, 13c, 13d** for items; from one compartment to another, these items may be of different types and of different size or of different dimensions.

Advantageously, the first **33** and second **34** dividing elements each consist of a plate.

These first **33** and second **34** dividing elements are reversibly fixed to each other.

For example, but not exclusively, the first dividing elements **33** have a series of equally spaced apart downwardly facing notches **33a** configured to mate with corresponding notches **34a** chosen from among a plurality of upwardly facing notches **34a** defined on the second dividing elements **34.**

In the embodiment described herein of an automatic cabinet **10** according to the invention, obviously exemplifying and not limiting the invention itself, the front part **14** comprises a support frame **35** for the dampers of the portal **16** and for the movement means of the dampers **19, 20, 21** and **22.**

This support frame **35** is covered with protective panels **36** and with a removable safety cover **37** at said portal **16.**

Such a removable cover **37** consists, for example, of a wing rotatably constrained to the support frame **35** about a horizontal axis.

The pick-up station **15** comprises the portal **16** with the dampers **19, 20, 21, 22.**

A passage space **38** for an object-holder tray **12** is defined below the dampers **19, 20, 21** and **22.**

The passage space **38** is obviously configured to allow the passage of a part of the transfer means **18** that supports the object-holder tray **12.**

The central part **17** comprises a load-bearing frame **41** for the transfer means **18,** two side walls **42** and a ceiling **43;** this ceiling **43** is contiguous with the ceiling of the rear part **11.**

The rear part **11** is closed at the rear by a rear wall **39.**

The upper part of the central part **17** is closed at the front by a front wall **44** up to the height of said portal **16.**

The lower part of the central part **17** is in communication with the passage space **38** of the front part **14,** i.e. below the dampers **19, 20, 21** and **22.**

In the automatic cabinet **10** according to the invention, the transfer means **18** comprise:
- a frame with movable rim **45,** clearly visible in Figures 11 and 11a, placed to translate horizontally, with respect to a normal operating arrangement, between a lower guide **46** and an upper guide **47,** that are fixed inside said central part **17;** the frame with movable rim **45** comprises a lower crosspiece **45a,** two side uprights **45b** and an upper crosspiece **45c;**
- first motorisation means **48** for the translation of the frame with movable rim **45** with respect to the lower **46** and upper **47** guides;
- a tray-holder drawer **49,** placed to translate vertically between the side uprights **45b** of the frame with movable rim **45;** the tray-holder drawer **49** comprises in turn a fixed body **50** constrained to translate on the side uprights **45b,** and a movable plate **51,** horizontally translatable with respect to the fixed body **50;**
- second motorisation means **52** for the vertical translation of said tray-holder drawer **49** with respect to the side uprights **45b;**
- third motorisation means **53** for the horizontal translation of the movable plate **51** with respect to the fixed body **50** in two opposite directions, which are configured to bring said movable plate **51** to project in a cantilevered manner with respect to the fixed body **50,** alternatively either inside said rear part **11** or inside said front part **14.**

In particular, in the present example embodiment, the first motorisation means **48,** for the translation of the frame with movable rim **45** with respect to the lower **46** and upper **47** guides, comprise an electric motor, positioned on board the frame with movable rim **45,** configured to drive a pinion-rack type device, wherein the rack is integral with the lower guide **46** and the pinion is connected to the drive shaft of the electric motor.

In particular, in the present example embodiment, the second motorisation means **52,** for the vertical translation of the tray-holder drawer **49** with respect to the side uprights **45b,** comprise an electric motor placed on board the fixed body **50** of the tray-holder drawer **49,** which electric motor drives, by means of a reduction gear, two opposite pinions each mated to a corresponding vertical rack, each of which is fixed to a respective side upright **45b** of the frame with movable rim **45.**

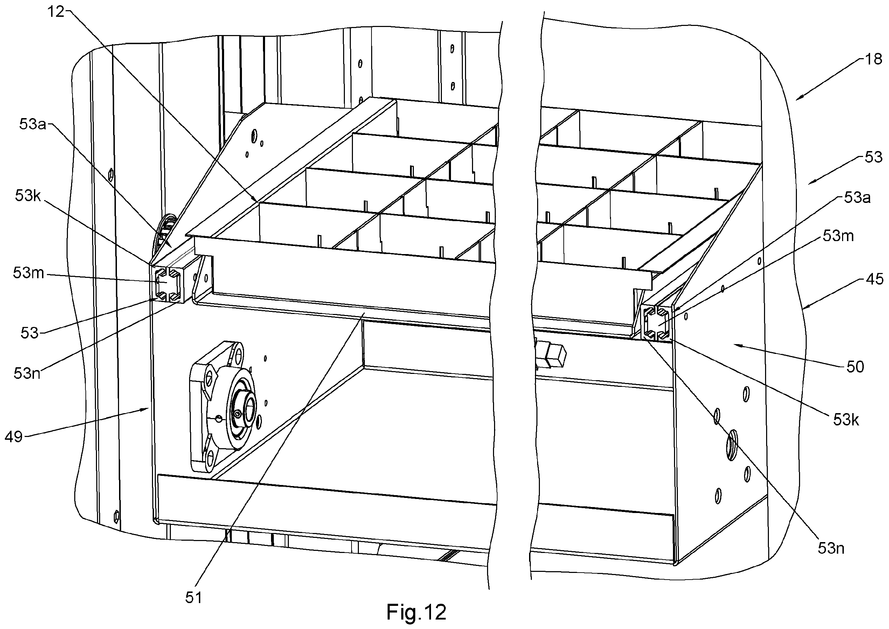

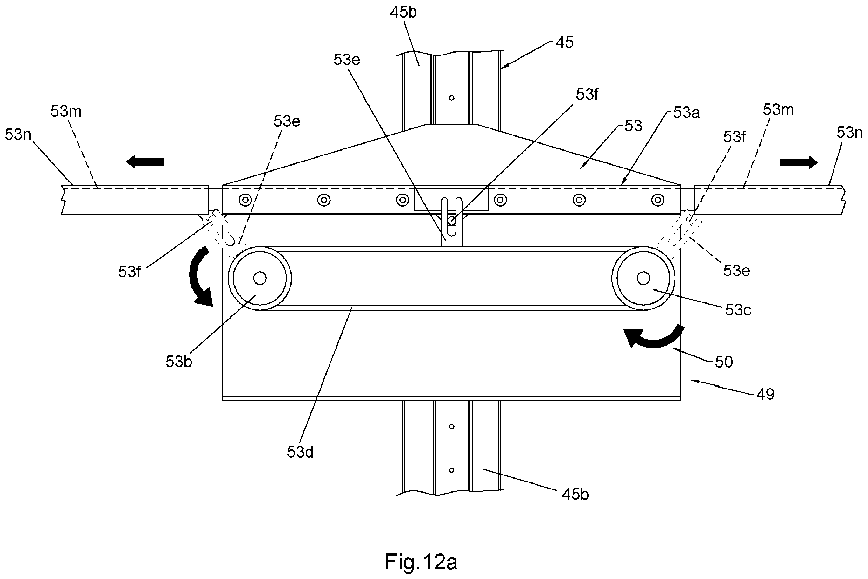

Still particularly, the third motorisation means **53** for the horizontal translation of the movable plate **51** with respect to the fixed body **50** in two opposite directions, schematised in Figures 12 and 12a, comprise two opposite bi-directional telescopic guides **53a** and corresponding actuator means.

A bi-directional telescopic guide **53a** comprises, for example, a fixed plate **53k,** which is fixed to the fixed body **50,** an intermediate extension bar **53m,** which translates on the fixed plate **53k,** and a movable plate **53n** which translates on the intermediate extension bar **53m.**

Such actuator means comprise, for example and not exclusively, a drive chain system comprising a drive gear **53b,** which is motorised for example by means of an electric motor not shown in the figures and to be understood to be of a known type, an opposite driven gear **53c,** a chain **53d** meshed with said two drive **53b** and driven **53c** gears, and at least one coupling fork **53e,** which coupling fork **53e** is fixed to the chain **53d** and is configured to couple a dragging projection **53f** integral with a movable part of the bi-directional telescopic guide **53a,** for example to the intermediate extension bar **53m.**

Such third motorisation means **53** are configured to alternatively allow two opposite horizontal translations of the movable plate **51** with respect to the fixed body **50** bearing it:
- a rearward horizontal translation of the movable plate **51** from a central arrangement above the fixed body **50** up to below an object-holder tray **12,** and back again;
- a forward translation always horizontally of the movable plate **51** from a central arrangement above the fixed body **50** up to below the portal **16** in the pick-up station **15,** and back again.

It goes without saying that such third motorisation means **53** may also be of a different type provided they are technically equivalent, for example of the "rack and pinion" type.

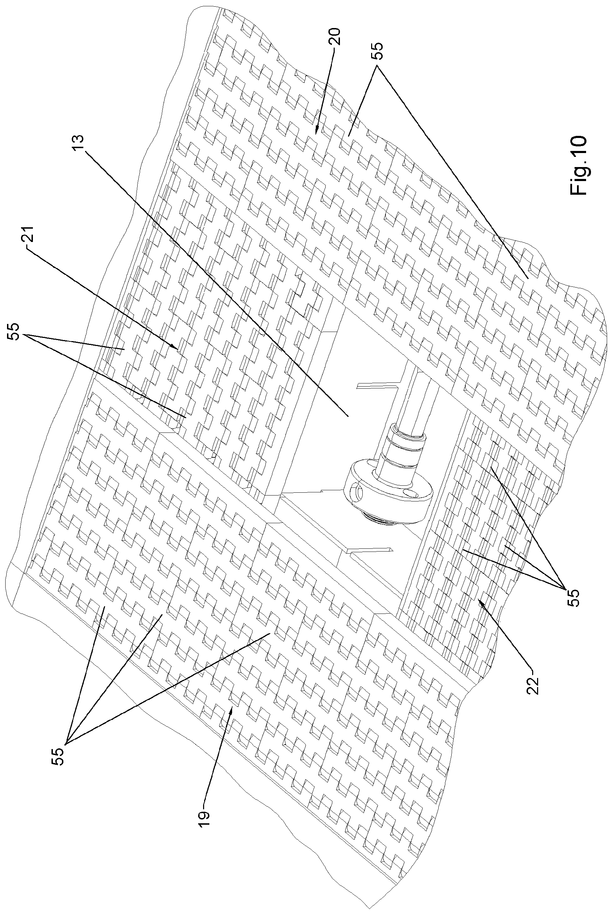

The first pair of dampers **19** and **20** comprises a first damper **19** and a second damper **20** both consisting of a plurality of articulated elements **55** hinged together along junction axes orthogonal to the first direction **X1,** to define respective rolling shutters; the articulated elements **55** are clearly visible in Figure 10.

In an alternative embodiment of the automatic cabinet **10** according to the invention, the first pair of dampers **19** and **20** comprises a first damper **19** and a second damper **20** which both consists of a respective rigid plate, to define respective rigid wings.

Such first damper **19** and second damper **20** each consist of, for example, a rigid plate made of metallic material.

Alternatively, such first damper **19** and second damper **20** each consist of, for example, a rigid plate made of plastic material.

Such first damper **19** and second damper **20,** which are rigid, are therefore unable to follow paths comprising curved sections.

In such an embodiment variant of the invention, the first **19** and second **20** dampers are configured to translate in a linear way, that is rectilinear, without travelling along any curved path.

This embodiment variant, comprising a first pair of dampers **19** and **20** whose first **19** and second **20** dampers consist of a respective rigid plate, makes it possible to realise an automatic cabinet **10** that is more secure in terms of anti-burglary, since this first pair of dampers **19 and 20** is devoid of all the articulated joints which are instead defined by the articulated elements **55** hinged together of the embodiment described above, where these articulated joints each define a point of possible break-in by an attacker.

Similarly, the second pair of dampers **21** and **22** comprises a third damper **21** and a fourth damper **22** both consisting of a plurality of articulated elements **55** hinged together along junction axes orthogonal to the second direction **X2,** to define respective rolling shutters.

In the present embodiment example, the first pair of dampers **19** and **20** has independent motorisation means for each of the first **19** and second **20** dampers.

In particular, the first damper **19** is placed to slide on side guides **56** and is moved in translation by a slider block **57** fixed to the first damper **19,** which slider block **57** is placed to slide on a central guide **58** and is moved by a linear actuator.

Such a linear actuator comprises, for example, a worm screw and recirculating ball screw type actuator, wherein the worm screw is driven by an electric motor **59;** the electric motor **59** is fixed to a frame element **35** of the front part **14.**

The second damper **20** is also placed to slide on side guides **60** and is moved in translation by a slider block **61** fixed to the second damper **20** and placed to slide on a central guide **62** and is moved by a linear actuator.

Such a linear actuator also consists, for example, of a worm screw and recirculating ball screw type actuator, wherein the worm screw is driven by an electric motor, the latter not shown but to be understood as the same as described for the first damper **19.**

The first damper **19** is placed to slide on side guides **56** having an entirely linear development, that is rectilinear.

The second damper **20** is also placed to slide on side guides **60** having an entirely linear development, that is rectilinear.

These side guides **56** and **60** therefore do not comprise curved sections.

Similarly, the second pair of dampers **21** and **22** have independent motorisation means for each of the third **21** and fourth **22** dampers.

In particular, the third damper **21** is placed to slide on side guides **65,** and is moved in translation by a slider block **66** fixed to the third damper **21,** as clearly visible in Figure 9, which slider block **66** is placed to slide on a central guide **67** and is moved by a linear actuator, for example of the worm screw and recirculating ball screw type, wherein the worm screw is driven by an electric motor **68** fixed to an element of the frame **35** of the front part **14.**

The fourth damper **22** is also placed to slide on side guides **71** and is moved in translation by a slider block **72** fixed to the fourth damper **22** itself and placed to slide on a central guide **73** and is moved by a linear actuator of, for example, the worm screw and recirculating ball screw type, wherein the worm screw is driven by an electric motor **74,** the latter being fixed to an element of the frame **35** of the front part **14.**

The side guides **65** and **71** of the third **21** and fourth **22** dampers respectively define a shift trajectory for the corresponding dampers that is partly curved.

In particular, the side guides **65** and **71** of the third **21** and fourth **22** dampers define a 90° curve.

Still particularly, the third damper **21** is moved in the vertical direction by its motorisation means, said side guides **65** and said central guide **67** being arranged at the front, vertical face of the central part **17.**

A portion of the end **21a** of the third damper **21** is diverted by the side guides **65** from a vertical sliding plane to a horizontal sliding plane, as clearly visible in Figure 7.

In particular, as described above, the end portion **21a** of the third damper **21** is placed to translate horizontally below the first pair of dampers **19** and **20.**

Similarly, the fourth damper **22** is moved in the vertical direction by its motorisation means, said side guides **71** and said central guide **73** being arranged at the front, vertical face of the front part **14.**

A portion of the end **22a** of the fourth damper **22** is diverted by the side guides **71** from a vertical sliding plane to a horizontal sliding plane, as clearly visible in Figure 7.

In particular, as described above, the end portion **22a** of the fourth damper **22** is placed to translate horizontally below the first pair of dampers **19** and **20.**

The third **21** and fourth **22** dampers, being composed of articulated elements **55,** are capable of bending and travelling along the 90° curved trajectory imposed on them by the side guides **65** and **71.**

The third **21** and fourth **22** dampers can basically be rolled-up, like shutters.

The automatic cabinet **10** according to the invention comprises an electronic control unit, indicated by **80** in the figures and exemplified as forming part of a control screen, configured for the selection of an object to be picked up from an object-holder tray **12** by a user **U,** and for coordinating the movements of said transfer means **18** and of said pairs of dampers **19, 20, 21** and **22.**

The electronic unit **80** operates basically as described below.

When a user **U** requests an item, he identifies himself through identification means, to be understood of a known type, and when the identification phase has been successful, the same user selects, via the control screen, an item to be picked up which is stowed in an orderly manner in one of the object-holder trays **12** which is located in the rear part **11** of the automatic cabinet **10.**

The electronic unit **80** comprises a database which contains information on the position of the individual items, i.e. on which object-holder tray **12** and in which compartment **13** of the matrix of compartments defined on the object-holder tray **12** a certain item is located.

Once the user **U** has selected an item, the electronic control unit **80** actuates the transfer means **18** so that the tray-holder drawer **49,** by means of the horizontal translation of the frame with movable rim **45** and by means of the vertical translation of the tray-holder drawer **49** itself on the frame with movable rim **45,** is brought close to the object-holder tray **12** on which the item to be picked up is stored.

Subsequently, the movable plate **51** is translated below the selected object-holder tray **12,** and subsequently translated upwards so as to raise the perimeter flaps **31** and **31a** of the object-holder tray **12** from resting on the rest elements **30** and **30a** of the load-bearing frame **28** of the rear part **11.**

Afterwards, the movable plate is brought back above the fixed body **50** of the tray-holder drawer **49.**

Still afterwards, the frame with movable rim **45** is horizontally translated in the area of the central part **17** which is located at the pick-up station **15** of the front part **14.**

The tray-holder drawer **49** is translated vertically to a height such that the movable plate **51** can be translated within the passage space **38,** below the portal 16 at the pick-up station **15.**

The tray-holder drawer **49** is maintained at a height such that the object-holder tray **12** is supported by the movable plate **51** close to the portal **16** above, i.e. close to the second pair of dampers **21** and **22.**

Each object-holder tray **12** has, as described above, an ordered matrix of compartments, some of which are indicated by way of example by the numbers **13, 13a, 13b, 13c, 13d.**

The position of each compartment **13** of an object-holder tray **12** is encoded, for example, with a pair of coordinates with respect to two orthogonal axes, for example the directions **X1** and **X2** of movement of the pairs of dampers; each compartment **13** is therefore in a precise column, therefore in a certain position with respect to a first direction **X1,** and in a precise row, therefore in a certain position with respect to the second direction **X2.**

The electronic unit **80** is configured, via special software, in such a way that the pairs of first **19** and **20,** and second **21** and **22** dampers translate in a coordinated manner, so that the transverse opening **23** is defined at the column of compartments **13** in which the item to be picked up is located, and the longitudinal opening **24** is defined at the row of compartments **13** in which the item to be picked up is located.

The intersection of the transverse **23** and longitudinal **24** openings results in the pick-up opening **25** exactly above the compartment **13** from which the user U is free to pick up the selected item.

Figure 3 exemplifies the automatic cabinet **10** with the dampers **19, 20, 21** and **22** positioned so that a user **U** can only and exclusively pick up the item present inside a compartment **13.**

Figure 15 exemplifies a different arrangement of the dampers **19, 20, 21** and **22,** wherein the pick-up opening **25** is defined at a different compartment **13d,** wherein, for example, a different item is contained than the item present in the previously indicated compartment **13.**

Figure 16 exemplifies a still different arrangement of the dampers **19, 20, 21** and **22,** wherein the pick-up opening **25** is such as to allow access to two or more compartments, for example to six compartments, three of which are indicated by way of example by **13a, 13b** and **13c.**

It has in practice been established that the invention achieves the intended task and objects.

In particular, the invention has developed an automatic cabinet **10** with a larger capacity than the vending machines of the known type and, at the same time, capable of containing a larger number of different types of items.

In fact, each object-holder tray **12** may contain as many different items as there are compartments **13** defined on it, and this situation may be repeated for all object-holder trays **12.**

Furthermore, with the invention, an automatic cabinet has been developed which is able to contain and offer to a user also heavy or fragile items, without these items having to undergo a drop which would jeopardise their integrity, thanks to the presence of the object-holder trays **12** which hold the items and offer them to the user **U** who picks them up from a stable rest position on a firm plane.

Furthermore, the invention has developed an automatic cabinet with a single pick-up point located at an ergonomically easy-to-access height.

Again, the invention has developed an automatic cabinet that can be governed and managed by means of digital electronic and computer control devices of a known type.

Last but not least, as described and exemplified in Figure 16, the invention has developed an automatic cabinet which allows more than one item to be picked up at the same time, an action which is not possible with any automatic vending machine of the known type.

The invention thus conceived is susceptible to many modifications and variants, all falling within the same inventive concept, as defined by the following claims; furthermore, all details can be replaced by other equivalent technical elements.

In practice, the components and materials used, as long as they are compatible with the specific use, as well as the dimensions and the contingent shapes, may be anyone according to requirements and the prior art.

If the characteristics and techniques mentioned in any claim are followed by reference signs, these reference signs are to be intended for the sole purpose of increasing the intelligibility of the claims and, consequently, such reference signs have no limiting effect on the interpretation of each element identified by way of example by these reference signs.

## Claims

1. Automatic cabinet (10) for the storage and on-demand distribution of items, comprising:
- a rear part (11) configured to contain an ordered plurality of object-holder trays (12);
- a plurality of object-holder trays (12) comprising a plurality of compartments (13, 13a);
- a front part (14) for picking up one or more objects from one of said object-holder trays (12), comprising a pick-up station (15) configured to house one of said object-holder trays (12), said pick-up station (15) having a portal (16) for closing/access to an object-holder tray (12) positioned therein;
- a central part (17) inside which transfer means (18) are placed, configured to pick up and to shift an object-holder tray (12) from said rear part (11) to said pick-up station (15) and vice versa;
said portal (16) comprising two opposing pairs of movable dampers (19, 20, 21, 22), which are motorised with corresponding movement means:
- a first pair of movable dampers (19, 20) operating along a first direction (X1);
- a second pair of movable dampers (21, 22) operating in a second direction (X2), orthogonal to said first direction (X1);
- a first pair of movable dampers (19, 20) being arranged to operate above the second pair of movable dampers (21, 22);
- a first pair of movable dampers (19, 20) defining between them a transverse opening (23) developing in said second direction (X2);
- a second pair of movable dampers (21, 22) defining between them a longitudinal opening (24) developing in said first direction (X1);
the intersection of said transverse opening (23) with said longitudinal opening (24) resulting in a pick-up opening (25) configured to allow access to one of said compartments (13), or to more compartments (13a, 13b, 13c) placed side by side, of an object-holder tray (12) positioned in said pick-up station (15),
**characterized in that** said transfer means (18) comprise:
- a frame with movable rim (45) placed to translate horizontally, with respect to a normal operating arrangement, between a lower guide (46) and an upper guide (47) that are fixed inside said central part (17), said frame with movable rim (45) comprising a lower crosspiece (45a), two side uprights (45b) and an upper crosspiece (45c);
- first motorisation means (48) for the translation of said frame with movable rim (45) with respect to said lower (46) and upper (47) guides;
- a tray-holder drawer (49), placed to translate vertically between said side uprights (45b) of said frame with movable rim (45), said tray-holder drawer (49) comprising a fixed body (50) constrained to translate on said side uprights (45b), and a movable plate (51), translatable horizontally with respect to said fixed body (50);
- second motorisation means (52) for the vertical translation of said tray-holder drawer (49) with respect to said side uprights (45b);
- third motorisation means (53) for the horizontal translation of said movable plate (51) with respect to said fixed body (50) in two opposite directions, which are configured to bring said movable plate (51) to project in a cantilevered manner with respect to said fixed body (50), alternatively either inside said rear part (11) or inside said front part (14).

2. Automatic cabinet according to claim 1, **characterized in that** said rear part (11) comprises a load-bearing frame (28) having a plurality of columnar elements (29, 29a, 29b, 29c), between which pairs of rest elements (30, 30a) are fixed which are facing each other and configured to support, by resting, a perimeter flap (31, 31a) of an object-holder tray (12), between a pair of said facing rest elements (30, 30a) there being defined a passage interspace for said transfer means (18).

3. Automatic cabinet according to claims 1 or 2, **characterized in that** said an object-holder tray (12) comprises a pan (32) inside which a plurality of dividing elements is arranged, i.e. first dividing elements (33), longitudinal, and second dividing elements (34), transverse, said first dividing elements (33) and said second dividing elements (34) intersecting to define a matrix of compartments (13, 13a, 13b, 13c, 13d) for containing items.

4. Automatic cabinet according to one or more of the preceding claims, **characterized in that** said front part (14) comprises a support frame (35) for said dampers (19, 20, 21, 22) of said portal (16) and for the means for moving said dampers (19, 20, 21, 22), said support frame (35) being covered with protective panels (36) and with a removable, safety cover (37), at said portal (16).

5. Automatic cabinet according to one or more of the preceding claims, **characterized in that** said pick-up station (15) comprises said portal (16) with said dampers (19, 20, 21, 22), below said dampers (19, 20, 21, 22) a passage space (38) being defined for an object-holder tray (12) and for part of said transfer means (18).

6. Automatic cabinet according to one or more of the preceding claims, **characterized in that** said central part (17) comprises a load-bearing frame (41) for the transfer means (18), two side walls (42) and a ceiling (43), said central part (17) being closed at the front by a front wall (44) up to the height of said portal (16), the lower part of said central part (17) being in communication with said passage space (38) of said front part (14).

7. Automatic cabinet according to one or more of the preceding claims, **characterized in that** said first pair of dampers (19, 20) comprises a first damper (19) and a second damper (20) both consisting of a plurality of articulated elements (55) hinged together along junction axes orthogonal to the first direction (X1), to define respective rolling shutters.

8. Automatic cabinet according to one or more of claims 1 to 6, **characterized in that** said first pair of dampers (19, 20) comprises a first damper (19) and a second damper (20) both consisting of a respective rigid plate, to define respective rigid wings.

9. Automatic cabinet according to one or more of the preceding claims, **characterized in that** said first damper (19) is placed to slide on side guides (56) and is moved in translation by a slider block (57) fixed to said first damper (19), which slider block (57) is placed to slide on a central guide (58) and is moved by a linear actuator, said second damper (20) also being placed to slide on side guides (60) and being moved in translation by a slider block (61) fixed to the second damper (20) and placed to slide on a central guide (62) and is moved by a linear actuator.

10. Automatic cabinet according to the preceding claim, **characterized in that** said first damper (19) is placed to slide on side guides (56) having an entirely linear development, that is rectilinear, said second damper (20) also being placed to slide on side guides (60) having an entirely linear development, that is rectilinear.

11. Automatic cabinet according to one or more of the preceding claims, **characterized in that** said second pair of dampers (21, 22) comprises a third damper (21) and a fourth damper (22) both consisting of a plurality of articulated elements (55) hinged together along junction axes orthogonal to the second direction (X2), to define respective rolling shutters.

12. Automatic cabinet according to one or more of the preceding claims, **characterized in that** said first pair of dampers (19, 20) has independent motorisation means for each of the first (19) and second (20) dampers.

13. Automatic cabinet according to one or more of the preceding claims, **characterized in that** said second pair of dampers (21, 22) has independent motorisation means for each of said third (21) and fourth (22) dampers.

14. Automatic cabinet according to one or more of the preceding claims, **characterized in that** it comprises an electronic control unit (80) configured for the selection of an object to be picked up from an object-holder tray (12) by a user, and for coordinating the movements of said transfer means (18) and of said pairs of dampers (19, 20, 21, 22).

## Patentansprüche

1. Automatischer Schrank (10) für die Lagerung und Verteilung von Gegenständen auf Anfrage, umfassend:
- einen hinteren Teil (11), der konfiguriert ist, um eine geordnete Vielzahl von Objekthaltereinsätzen (12) zu fassen;
- eine Vielzahl von Objekthaltereinsätzen (12), umfassend eine Vielzahl von Fächern (13, 13a);
- einen vorderen Teil (14) zum Aufnehmen eines oder mehrerer Objekte aus einem der Objekthaltereinsätze (12), umfassend eine Aufnahmestation (15), die konfiguriert ist, um einen der Objekthaltereinsätze (12) unterzubringen, wobei die Aufnahmestation (15) ein Portal (16) zum Schließen/Zugreifen auf einen darin positionierten Objekthaltereinsatz (12) aufweist;
- einen mittleren Teil (17), innerhalb dessen Transfermittel (18) platziert sind, die konfiguriert sind, um einen Objekthaltereinsatz (12) aufzunehmen und um diesen von dem hinteren Teil (11) zu der Aufnahmestation (15) und umgekehrt zu versetzen;
das Portal (16) umfassend zwei gegenüberliegende Paare von bewegbaren Dämpfern (19, 20, 21, 22), die mit entsprechenden Bewegungsmitteln motorisiert sind:
- ein erstes Paar von bewegbaren Dämpfern (19, 20), die entlang einer ersten Richtung (X1) in Betrieb sind;
- ein zweites Paar von bewegbaren Dämpfern (21, 22), die in einer zweiten Richtung (X2) orthogonal zu der ersten Richtung (X1) in Betrieb sind;
- ein erstes Paar von bewegbaren Dämpfern (19, 20), die angeordnet sind, um oberhalb des zweiten Paars von bewegbaren Dämpfern (21, 22) in Betrieb zu sein;
- ein erstes Paar von bewegbaren Dämpfern (19, 20), die zwischen ihnen eine Queröffnung (23) definieren, die in der zweiten Richtung (X2) verläuft;
- ein zweites Paar von bewegbaren Dämpfern (21, 22), die zwischen ihnen eine Längsöffnung (24) definieren, die in der ersten Richtung (X1) verläuft;
wobei die Schnittstelle der Queröffnung (23) mit der Längsöffnung (24) eine Aufnahmeöffnung (25) ergibt, die konfiguriert ist, um das Zugreifen auf eines der Fächer (13) oder auf mehrere Fächer (13a, 13b, 13c), die nebeneinander platziert sind, eines Objekthaltereinsatzes (12), der in der Aufnahmestation (15) positioniert ist, zu ermöglichen,
**dadurch gekennzeichnet, dass** die Transfermittel (18) umfassen:
- einen Rahmen mit bewegbarem Rand (45), der platziert ist, um sich in Bezug auf eine normale Betriebsanordnung horizontal zu verschieben, zwischen einer unteren Führung (46) und einer oberen Führung (47), die innerhalb des mittleren Teils (17) befestigt sind, der Rahmen mit bewegbarem Rand (45) umfassend einen unteren Steg (45a), zwei Seitenpfosten (45b) und einen oberen Steg (45c);
- erste Motorisierungsmittel (48) für die Verschiebung des Rahmens mit bewegbarem Rand (45) in Bezug auf die untere (46) und die obere (47) Führung;
- eine Einsatzhalterschublade (49), die platziert ist, um sich zwischen den Seitenpfosten (45b) des Rahmens mit bewegbarem Rand (45) vertikal zu verschieben, die Einsatzhalterschublade (49) umfassend einen feststehenden Körper (50), der darauf beschränkt ist, sich an den Seitenpfosten (45b) zu verschieben, und eine bewegbare Platte (51), die in Bezug auf den feststehenden Körper (50) horizontal verschiebbar ist;
- zweite Motorisierungsmittel (52) für die vertikale Verschiebung der Einsatzhalterschublade (49) in Bezug auf die Seitenpfosten (45b);
- dritte Motorisierungsmittel (53) für die horizontale Verschiebung der bewegbaren Platte (51) in Bezug auf den feststehenden Körper (50) in zwei gegenüberliegende Richtungen, die konfiguriert sind, um die bewegbare Platte (51) dazu zu bringen, in einer freitragenden Weise in Bezug auf den feststehenden Körper (50) hervorzustehen, alternativ entweder innerhalb des hinteren Teils (11) oder innerhalb des vorderen Teils (14).

2. Automatischer Schrank nach Anspruch 1,
**dadurch gekennzeichnet, dass** der hintere Teil (11) einen tragenden Rahmen (28) umfasst, der eine Vielzahl von säulenförmigen Elementen (29, 29a, 29b, 29c) aufweist, zwischen denen Paare von Auflageelementen (30, 30a) befestigt sind, die einander zugewandt und konfiguriert sind, um durch Auflegen eine Umfangsklappe (31, 31a) eines Objekthaltereinsatzes (12) zu stützen, wobei zwischen einem Paar der zugewandten Auflageelemente (30, 30a) ein Durchgangszwischenraum für die Transfermittel (18) definiert ist.

3. Automatischer Schrank nach Anspruch 1 oder 2,
**dadurch gekennzeichnet, dass** der eine Objekthaltereinsatz (12) eine Schale (32) umfasst, innerhalb der eine Vielzahl von Unterteilungselementen angeordnet ist, d. h. erste Unterteilungselemente (33) in Längsrichtung und zweite Unterteilungselemente (34) in Querrichtung, wobei die ersten Unterteilungselemente (33) und die zweiten Unterteilungselemente (34) sich schneiden, um eine Matrix von Fächern (13, 13a, 13b, 13c, 13d) zum Fassen von Objekten zu definieren.

4. Automatischer Schrank nach einem oder mehreren der vorstehenden Ansprüche, **dadurch gekennzeichnet, dass** der vordere Teil (14) einen Stützrahmen (35) für die Dämpfer (19, 20, 21, 22) des Portals (16) und für die Mittel zum Bewegen der Dämpfer (19, 20, 21, 22) umfasst, wobei der Stützrahmen (35) mit Schutzpaneelen (36) und mit einer abnehmbaren Sicherheitsabdeckung (37) an dem Portal (16) abgedeckt ist.

5. Automatischer Schrank nach einem oder mehreren der vorstehenden Ansprüche, **dadurch gekennzeichnet, dass** die Aufnahmestation (15) das Portal (16) mit den Dämpfern (19, 20, 21, 22) umfasst, wobei unterhalb der Dämpfer (19, 20, 21, 22) ein Durchgangsraum (38) für einen Objekthaltereinsatz (12) und für einen Teil der Transfermittel (18) definiert ist.

6. Automatischer Schrank nach einem oder mehreren der vorstehenden Ansprüche, **dadurch gekennzeichnet, dass** der mittlere Teil (17) einen tragenden Rahmen (41) für die Transfermittel (18), zwei Seitenwände (42) und eine Decke (43) umfasst, wobei der mittlere Teil (17) an der Vorderseite durch eine vordere Wand (44) bis zu der Höhe des Portals (16) geschlossen ist, wobei der untere Teil des mittleren Teils (17) mit dem Durchgangsraum (38) des vorderen Teils (14) in Verbindung steht.

7. Automatischer Schrank nach einem oder mehreren der vorstehenden Ansprüche, **dadurch gekennzeichnet, dass** das erste Paar von Dämpfern (19, 20) einen ersten Dämpfer (19) und einen zweiten Dämpfer (20) umfasst, die beide aus einer Vielzahl von Gelenkelemente (55) bestehen, die entlang von Kreuzungsachsen orthogonal zu der ersten Richtung (X1) aneinander angelenkt sind, um jeweilige Rollläden zu definieren.

8. Automatischer Schrank nach einem oder mehreren der Ansprüche 1 bis 6, **dadurch gekennzeichnet, dass** das erste Paar von Dämpfern (19, 20) einen ersten Dämpfer (19) und einen zweiten Dämpfer (20) umfasst, die beide aus jeweils einer starren Platte bestehen, um jeweils starre Flügel zu definieren.

9. Automatischer Schrank nach einem oder mehreren der vorstehenden Ansprüche, **dadurch gekennzeichnet, dass** der erste Dämpfer (19) platziert ist, um auf Seitenführungen (56) zu gleiten, und bei Verschiebung durch einen Gleitblock (57) bewegt wird, der an dem ersten Dämpfer (19) befestigt ist, wobei der Gleitblock (57) platziert ist, um auf einer mittleren Führung (58) zu gleiten, und durch ein lineares Betätigungsglied bewegt wird, wobei der zweite Dämpfer (20) ebenso platziert ist, um auf Seitenführungen (60) zu gleiten, und bei Verschiebung durch einen Gleitblock (61) bewegt wird, der an dem zweiten Dämpfer (20) befestigt und platziert ist, um auf einer mittleren Führung (62) zu gleiten, und durch ein lineares Betätigungsglied bewegt wird.

10. Automatischer Schrank nach dem vorstehenden Anspruch,
**dadurch gekennzeichnet, dass** der erste Dämpfer (19) platziert ist, um auf Seitenführungen (56) zu gleiten, die einen völlig linearen, das heißt geradlinigen, Verlauf aufweisen, wobei der zweite Dämpfer (20) ebenso platziert ist, um auf Seitenführungen (60) zu gleiten, die einen völlig linearen, das heißt geradlinigen, Verlauf aufweisen.

11. Automatischer Schrank nach einem oder mehreren der vorstehenden Ansprüche, **dadurch gekennzeichnet, dass** das zweite Paar von Dämpfern (21, 22) einen dritten Dämpfer (21) und einen vierten Dämpfer (22) umfasst, die beide aus einer Vielzahl von Gelenkelementen (55) bestehen, die entlang von Kreuzungsachsen orthogonal zu der zweiten Richtung (X2) aneinander angelenkt sind, um jeweilige Rollläden zu definieren.

12. Automatischer Schrank nach einem oder mehreren der vorstehenden Ansprüche, **dadurch gekennzeichnet, dass** das erste Paar von Dämpfern (19, 20) unabhängige Motorisierungsmittel für jeden des ersten (19) und des zweiten (20) Dämpfers aufweist.

13. Automatischer Schrank nach einem oder mehreren der vorstehenden Ansprüche, **dadurch gekennzeichnet, dass** das zweite Paar von Dämpfern (21, 22) unabhängige Motorisierungsmittel für jeden des dritten (21) und des vierten (22) Dämpfers aufweist.

14. Automatischer Schrank nach einem oder mehreren der vorstehenden Ansprüche, **dadurch gekennzeichnet, dass** er eine elektronische Steuereinheit (80) umfasst, die für die Auswahl eines durch einen Benutzer aus einem Objekthaltereinsatz (12) aufzunehmenden Objekts und zum Koordinieren der Bewegungen der Transfermittel (18) und der Paare von Dämpfern (19, 20, 21, 22) konfiguriert ist.

## Revendications

1. Armoire automatique (10) permettant le stockage et la distribution à la demande d'articles, comprenant :
- une partie arrière (11) conçue pour contenir une pluralité ordonnée de plateaux porte-objets (12) ;
- une pluralité de plateaux porte-objets (12) comprenant une pluralité de compartiments (13, 13a) ;
- une partie avant (14) pour récupérer un ou plusieurs objets dans l'un desdits plateaux porte-objets (12), comprenant une station de récupération (15) conçue pour loger l'un desdits plateaux porte-objets (12), ladite station de récupération (15) ayant une entrée (16) pour fermer/accéder à un plateau porte-objets (12) positionné à l'intérieur ;
- une partie centrale (17) à l'intérieur de laquelle sont placés des moyens de transfert (18) conçus pour récupérer et décaler un plateau porte-objet (12) de ladite partie arrière (11) vers ladite station de récupération (15) et vice versa ;
ladite entrée (16) comprenant deux paires opposées de clapets mobiles (19, 20, 21, 22), qui sont motorisés avec des moyens de mouvement correspondants :
- une première paire de clapets mobiles (19, 20) fonctionnant le long d'une première direction (X1) ;
- une seconde paire de clapets mobiles (21, 22) fonctionnant dans une seconde direction (X2), orthogonale à ladite première direction (X1) ;
- une première paire de clapets mobiles (19, 20) étant agencée pour fonctionner au-dessus de la seconde paire de clapets mobiles (21, 22) ;
- une première paire de clapets mobiles (19, 20) définissant entre eux une ouverture transversale (23) se développant dans ladite seconde direction (X2) ;
- une seconde paire de clapets mobiles (21, 22) définissant entre eux une ouverture longitudinale (24) se développant dans ladite première direction (X1) ;
l'intersection de ladite ouverture transversale (23) avec ladite ouverture longitudinale (24) donnant lieu à une ouverture de récupération (25) conçue pour permettre l'accès à l'un desdits compartiments (13), ou à plusieurs compartiments (13a, 13b, 13c) placés côte à côte, d'un plateau porte-objets (12) positionné dans ladite station de récupération (15),
**caractérisée en ce que** lesdits moyens de transfert (18) comprennent :
- un cadre à rebord mobile (45) placé pour se déplacer horizontalement, par rapport à une disposition normale de fonctionnement, entre un guide inférieur (46) et un guide supérieur (47) qui sont fixés à l'intérieur de ladite partie centrale (17), ledit cadre à rebord mobile (45) comprenant une pièce transversale inférieure (45a), deux montants latéraux (45b) et une pièce transversale supérieure (45c) ;
- des premiers moyens de motorisation (48) pour le déplacement dudit cadre à rebord mobile (45) par rapport auxdits guides inférieur (46) et supérieur (47) ;
- un tiroir porte-plateaux (49), placé pour se déplacer verticalement entre lesdits montants latéraux (45b) dudit cadre à rebord mobile (45), ledit tiroir porte-plateaux (49) comprenant un corps fixe (50) contraint à se déplacer sur lesdits montants latéraux (45b), et une plaque mobile (51), pouvant se déplacer horizontalement par rapport audit corps fixe (50) ;
- des deuxièmes moyens de motorisation (52) pour le déplacement vertical dudit tiroir porte-plateaux (49) par rapport auxdits montants latéraux (45b) ;
- des troisièmes moyens de motorisation (53) pour le déplacement horizontal de ladite plaque mobile (51) par rapport audit corps fixe (50) dans deux directions opposées, qui sont conçus pour amener ladite plaque mobile (51) à faire saillie en porte-à-faux par rapport audit corps fixe (50), alternativement soit à l'intérieur de ladite partie arrière (11), soit à l'intérieur de ladite partie avant (14).

2. Armoire automatique selon la revendication 1, **caractérisée en ce que** ladite partie arrière (11) comprend un cadre porteur (28) ayant une pluralité d'éléments colonnaires (29, 29a, 29b, 29c), entre lesquels sont fixés des paires d'éléments de repos (30, 30a) se faisant face l'un l'autre et conçus pour supporter, en repos, un volet périmétrique (31, 31a) d'un plateau porte-objets (12), entre une paire desdits éléments de repos se faisant face (30, 30a) étant défini un espace intermédiaire de passage pour lesdits moyens de transfert (18).

3. Armoire automatique selon les revendications 1 ou 2, **caractérisée en ce que** ledit plateau porte-objets (12) comprend un bac (32) à l'intérieur duquel est agencée une pluralité d'éléments de séparation, c'est-à-dire des premiers éléments de séparation (33), longitudinaux, et des seconds éléments de séparation (34), transversaux, lesdits premiers éléments de séparation (33) et lesdits seconds éléments de séparation (34) s'entrecroisant pour définir une matrice de compartiments (13, 13a, 13b, 13c, 13d) destinés à contenir des articles.

4. Armoire automatique selon une ou plusieurs des revendications précédentes, **caractérisée en ce que** ladite partie avant (14) comprend un cadre de support (35) pour lesdits clapets (19, 20, 21, 22) de ladite entrée (16) et pour les moyens de déplacement desdits clapets (19, 20, 21, 22), ledit cadre de support (35) étant recouvert de panneaux de protection (36) et d'un couvercle de sécurité amovible (37), au niveau de ladite entrée (16).

5. Armoire automatique selon une ou plusieurs des revendications précédentes, **caractérisée en ce que** ladite station de récupération (15) comprend ladite entrée (16) avec lesdits clapets (19, 20, 21, 22), sous lesdits clapets (19, 20, 21, 22), un espace de passage (38) étant défini pour un plateau porte-objet (12) et pour une partie desdits moyens de transfert (18).

6. Armoire automatique selon une ou plusieurs des revendications précédentes, **caractérisée en ce que** ladite partie centrale (17) comprend un cadre porteur (41) pour les moyens de transfert (18), deux parois latérales (42) et un plafond (43), ladite partie centrale (17) étant fermée au niveau de l'avant par une paroi avant (44) jusqu'à la hauteur de ladite entrée (16), la partie inférieure de ladite partie centrale (17) étant en communication avec ledit espace de passage (38) de ladite partie avant (14).

7. Armoire automatique selon une ou plusieurs des revendications précédentes, **caractérisée en ce que** ladite première paire de clapets (19, 20) comprend un premier clapet (19) et un deuxième clapet (20), tous deux constitués d'une pluralité d'éléments articulés (55), articulés ensemble selon des axes de jonction orthogonaux à la première direction (X1), pour définir des portes-rideaux respectives.

8. Armoire automatique selon une ou plusieurs des revendications 1 à 6, **caractérisée en ce que** ladite première paire de clapets (19, 20) comprend un premier clapet (19) et un deuxième clapet (20), tous deux constitués d'une plaque rigide respective, pour définir des ailes rigides respectives.

9. Armoire automatique selon une ou plusieurs des revendications précédentes, **caractérisée en ce que** ledit premier clapet (19) est placé pour coulisser sur des guides latéraux (56) et est déplacé en translation par un bloc coulissant (57) fixé audit premier clapet (19), ce bloc coulissant (57) est placé pour coulisser sur un guide central (58) et est déplacé par un actionneur linéaire, ledit deuxième clapet (20) étant également placé pour coulisser sur des guides latéraux (60) et étant déplacé en translation par un bloc coulissant (61) fixé au deuxième clapet (20) et placé pour coulisser sur un guide central (62) et est déplacé par un actionneur linéaire.

10. Armoire automatique selon la revendication précédente, **caractérisée en ce que** ledit premier clapet (19) est placé pour coulisser sur des guides latéraux (56) ayant un développement entièrement linéaire, c'est-à-dire rectiligne, ledit deuxième clapet (20) étant également placé pour coulisser sur des guides latéraux (60) ayant un développement entièrement linéaire, c'est-à-dire rectiligne.

11. Armoire automatique selon une ou plusieurs des revendications précédentes, **caractérisée en ce que** ladite seconde paire de clapets (21, 22) comprend un troisième clapet (21) et un quatrième clapet (22), tous deux constitués d'une pluralité d'éléments articulés (55) articulés entre eux selon des axes de jonction orthogonaux à la seconde direction (X2), pour définir des portes-rideaux respectives.

12. Armoire automatique selon une ou plusieurs des revendications précédentes, **caractérisée en ce que** ladite première paire de clapets (19, 20) a des moyens de motorisation indépendants pour chacun des premier (19) et deuxième (20) clapets.

13. Armoire automatique selon une ou plusieurs des revendications précédentes, **caractérisée en ce que** ladite seconde paire de clapets (21, 22) comporte des moyens de motorisation indépendants pour chacun desdits troisième (21) et quatrième (22) clapets.

14. Armoire automatique selon une ou plusieurs des revendications précédentes, **caractérisée en ce qu'elle** comprend une unité de commande électronique (80) configurée pour la sélection d'un objet à récupérer d'un plateau porte-objet (12) par un utilisateur, et pour coordonner les mouvements desdits moyens de transfert (18) et desdites paires de clapets (19, 20, 21, 22).
